# EUROPÄISCHE PATENTSCHRIFT

(11) **EP 3 688 326 B1**
(45) Veröffentlichungstag und Bekanntmachung des Hinweises auf die Patenterteilung: **22.09.2021**
(21) Anmeldenummer: 18756185.7
(22) Anmeldetag: 13.08.2018
(51) Int. Cl.: F16C 11/06, B60G 7/00

(54) **GELENKANORDNUNG**
JOINT ASSEMBLY
SYSTÈME D'ARTICULATION

(30) Priorität: 28.09.2017 DE 102017217277
(43) Veröffentlichungstag der Anmeldung: 05.08.2020
(73) Patentinhaber: ZF Friedrichshafen AG, 88046 Friedrichshafen (DE)
(72) Erfinder: DOBBELHOFF, Frank, 49593 Bersenbrück (DE); SIEBE, Arne, 32351 Stemwede (DE)
(74) Vertreter: ZF Friedrichshafen AG
(86) Internationale Anmeldenummer: PCT/EP2018/071853
(87) Internationale Veröffentlichungsnummer: WO 2019/063182

(56) Entgegenhaltungen:
- DE-A1- 2 834 333
- DE-A1-102004 044 776
- DE-A1-102005 027 825
- DE-A1-102016 204 292

## Beschreibung

Die Erfindung betrifft eine Gelenkanordnung für ein Fahrwerk gemäß dem Oberbegriff des Anspruchs 1.

Eine solche Gelenkanordnung ist jeweils einem der Dokumente DE 10 2004 044776 A1, DE 10 2005 027 825 A1 oder DE 10 2016 204292 A1 zu entnehmen. Diese zeigen jeweils eine Gelenkanordnung mit einem Dichtungsbalg, wobei am Zapfenteil eines Kugelzapfens eine umlaufende Nut ausgebildet ist, die einen nach innen ragenden Abschnitt des zapfenseitigen Endes des Dichtungsbalgs aufnimmt.

Aus der DE 28 34 333 A1 ist eine Gelenkanordnung bekannt, bei der eine axial geschlitzte Buchse in Kombination mit einem konischen Kugelzapfen verwendet wird. Ein Hinweis auf die Verwendung eines Dichtungsbalgs findet sich jedoch nicht.

Gelenkanordnungen sind aus verschiedenen Bereichen der Technik bekannt. Insbesondere in der Fahrwerkstechnik kommen diese zum Einsatz, um unterschiedliche Komponenten des Fahrwerks gelenkig miteinander zu verbinden. Zur Erzielung einer dreh- und schwenkbeweglichen Verbindung mit drei rotatorischen Freiheitsgraden kommen dabei typischerweise Kugelgelenke zum Einsatz. Als wesentliche Elemente weist ein Kugelgelenk einen Kugelzapfen und ein Gelenkgehäuse auf, wobei der Kugelzapfen mit einem Kugelteil vom Gelenkgehäuse aufgenommen wird, um diesem gegenüber dreh- und schwenkbeweglich gelagert zu sein. Ein dem Kugelteil abgewandtes Zapfenteil des Kugelzapfens ragt in einer Axialrichtung (bezogen auf den Kugelzapfen) vom Kugelgelenk ab und dient letztlich zur Anbindung an ein Fahrwerksbauteil. Unterschiedliche Bauformen von Kugelgelenken sind bekannt.

Zur Gewährleistung eines dauerhaften Betriebs des Kugelgelenks ist eine Abdichtung gegenüber der äußeren Umgebung notwendig. Auf in der Fahrwerkstechnik zum Einsatz kommende Kugelgelenke trifft dies in besonderem Maße zu, da diese aufgrund der örtlichen Nähe zum befahrenen Boden der Gefahr von Verschmutzung und/oder des Eindringens von Feuchtigkeit ausgesetzt sind. In der Fahrwerkstechnik eingesetzte Gelenkanordnungen mit einem Kugelgelenk sind daher zweckmäßigerweise mit einem geeigneten Dichtsystem ausgestattet. Die Gelenkanordnung weist dazu einen sogenannten Dichtungsbalg auf, der sich von einem gehäuseseitigen Ende (dem Gelenkgehäuse zugeordnet) zu einem zapfenseitigen Ende (dem Zapfenteil des Kugelzapfens zugeordnet) schlauchartig erstreckt, um das Kugelgelenk gegenüber der äußeren Umgebung abzudichten. Dabei liegt das gehäuseseitige Ende des Dichtungsbalgs abdichtend am Gelenkgehäuse des Kugelgelenks an, während das zapfenseitige Ende des Dichtungsbalgs abdichtend am Zapfenteil des Kugelzapfens anliegt.

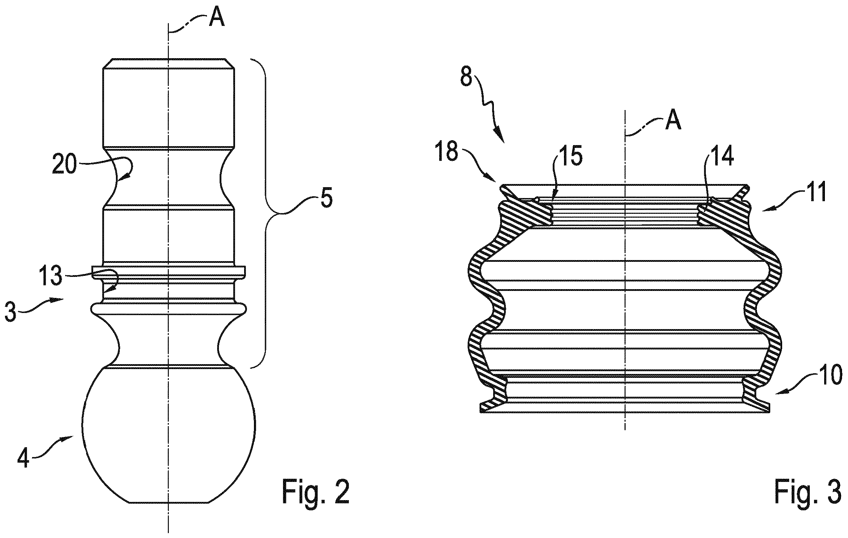

Eine derartige Gelenkanordnung ist bekannt aus CN 205383269 U. Bei der darin gezeigten Gelenkanordnung sind am zapfenseitigen Ende des Dichtungsbalgs weiterhin zwei in Axialrichtung abragende Dichtlippen ausgebildet, die ein mit dem Zapfenteil des Kugelzapfens verbundenes Fahrwerkbauteil kontaktieren. In beispielsweise der dortigen Figur 3 sind diese Dichtlippen mit den Bezugszeichen 18 und 19 bezeichnet. Bei der bekannten Gelenkanordnung ist als nachteilig anzusehen, dass das zapfenseitige Ende des Dichtungsbalgs gegenüber dem Zapfenteil in Axialrichtung ungesichert ist. Die beiden erwähnten Dichtlippen 18, 19, die das Fahrwerksbauteil kontaktieren, können daher nur eine begrenzte Dichtkraft erzeugen.

Ein weiterer Nachteil ist, dass bei bestimmten Fahrwerksbauteilen wie beispielsweise einem typischerweise an das Zapfenteil angebauten Radträger, ein teilweise scharfkantiger Kontakt zwischen den axial abragenden Dichtlippen gegenüber dem Fahrwerksbauteil entstehen kann, der zu einem erhöhten Verschleiß einer oder beider Dichtlippen führt. Ein derartiger scharfkantiger Kontakt kann bei einem Radträger entstehen, da dieser unmittelbar angrenzend an die Montageausnehmung für das Zapfenteil oftmals mit einem Trennschlitz versehen ist, der im eingebauten Zustand des Kugelzapfens eine Verspannung zwischen Zapfenteil und Fahrwerkbauteil ermöglicht. Bei einem dadurch bedingten erhöhten Verschleiß weist die bekannte Gelenkanordnung nur noch eine unzureichende Dichtigkeit auf, was zu einer erhöhten Gefahr einer Beschädigung des Kugelgelenks führt.

Es ist eine Aufgabe der vorliegenden Erfindung, eine Gelenkanordnung der eingangs genannten Art anzugeben, die hinsichtlich der Betriebssicherheit verbessert ist, insbesondere soll diese ein zuverlässigeres, langlebigeres Dichtsystem aufweisen.

Die Aufgabe wird gelöst durch eine Gelenkanordnung mit den Merkmalen des Anspruchs 1. Es handelt sich dabei um eine Gelenkanordnung für ein Fahrwerk, die als wesentliche Elemente ein Kugelgelenk und einen Dichtungsbalg aufweist. Das Kugelgelenk ist mit einem Kugelzapfen versehen, der mit einem Kugelteil dreh- und schwenkbeweglich gegenüber einem Gelenkgehäuse gelagert ist und der mit einem Zapfenteil zumindest teilweise in ein Fahrwerksbauteil hineinragt. Der Dichtungsbalg erstreckt sich von einem gehäuseseitigen Ende zu einem zapfenseitigen Ende schlauchartig, um das Kugelgelenk gegenüber der äußeren Umgebung abzudichten. Erfindungsgemäß zeichnet sich die Gelenkanordnung dadurch aus, dass am Zapfenteil des Kugelzapfens eine umlaufende Nut ausgebildet ist, die einen nach innen ragenden Abschnitt des zapfenseitigen Endes des Dichtungsbalgs zur Bildung eines Hauptabdichtbereichs aufnimmt.

Die erfindungsgemäße Merkmalskombination bewirkt vorteilhaft, dass das zapfenseitige Ende des Dichtungsbalgs aufgrund eines Formschlusses zwischen dem nach innen ragenden Abschnitt des Dichtungsbalgs und der am Zapfenteil des Kugelzapfens ausgebildeten umlaufenden Nut axial gesichert ist. Damit kann gewährleistet werden, dass das zapfenseitige Ende des Dichtungsbalgs in sämtlichen Betriebszuständen des Kugelgelenks (minimale bis maximale Auslenkung und/oder Verdrehung um die Mittelachse des Kugelzapfens) in einer definierten Relativposition sowohl zum Zapfenteil als auch zum damit verbundenen Fahrwerksbauteil gehalten wird. Die definierte Position ermöglicht eine gegenüber der aus CN 205383269 U bekannten Gelenkanordnung genauere Einstellung des Dichtsystems. So lässt sich die Dichtkraft einer in Axialrichtung abragenden Dichtlippe aufgrund der bekannten Axialposition des zapfenseitigen Endes des Dichtungsbalgs präzise einstellen. Zudem weist der durch den nach innen ragenden, in die umlaufende Nut eingreifenden Abschnitt gebildete Hauptabdichtbereich schon aufgrund der einfachen labyrinthartigen Gestaltung (Dichtflächen erstrecken sich in Umfangsrichtung sowie in Radialrichtung) eine erhöhte Dichtwirkung auf. Die eingangs genannte Aufgabe wird damit gelöst. Erfindungsgemäß sieht die Gelenkanordnung vor, dass am zapfenseitigen Ende des Dichtungsbalgs ein umlaufender Vorsprung zur Bildung eines Vorabdichtbereichs gegenüber dem Zapfenteil ausgebildet ist, wobei die umlaufende Nut axial derart am Zapfenteil positioniert ist, dass der umlaufende Vorsprung sicher und kontaktfrei von dem Fahrwerksbauteil beabstandet ist. Der umlaufende Vorsprung ragt dabei in Axialrichtung vom zapfenseitigen Ende des Dichtungsbalgs ab. Aufgrund der beschriebenen Geometrie ist durch Zusammenwirken des nach innen ragenden, in die umlaufende Nut am Zapfenteil eingreifenden Abschnitts des zapfenseitigen Endes des Dichtungsbalgs und der begrenzten axialen Erstreckung des umlaufenden Vorsprungs gewährleistet, dass der umlaufende Vorsprung, welcher einen Vorabdichtbereich gegenüber dem Zapfenteil bildet, das Fahrwerksbauteil nicht berührt. Da ein axiales Verschieben des zapfenseitigen Endes des Dichtungsbalgs durch die erfindungsgemäße Merkmalskombination wirksam verhindert wird, wird gewährleistet, dass über die gesamte Betriebsdauer, insbesondere unabhängig vom Verschleißzustand der Gelenkanordnung, ein Kontakt zwischen dem umlaufenden Vorsprung und dem Fahrwerksbauteil ausgeschlossen ist. Dies trägt zur Langlebigkeit der Gelenkanordnung auf vorteilhafte Weise bei.

Vorteilhaft bildet der umlaufende Vorsprung einen in radialer Richtung gegenüber dem Zapfenteil wirkenden Vorabdichtbereich. Eine Dichtkraft zwischen dem umlaufenden Vorsprung und dem Zapfenteil wirkt demnach in Radialrichtung, nämlich auf das Zapfenteil gerichtet.

Gemäß einer vorteilhaften Weiterbildung der Gelenkanordnung können am zapfenseitigen Ende des Dichtungsbalgs weitere Dichtelemente vorgesehen sein. Vorzugsweise ist am zapfenseitigen Ende des Dichtungsbalgs eine in Axialrichtung wirkende, das Fahrwerksbauteil berührende Dichtlippe ausgebildet. Durch eine oder mehrere solcher Dichtlippen kann der gesamte zwischen Fahrwerksbauteil und Gelenkgehäuse vom Dichtungsbalg umschlossene Bereich gegenüber der äußeren Umgebung abgedichtet werden.

Zur Gewährleistung einer dauerhaft ausreichenden Dichtkraft insbesondere im Hauptabdichtbereich ist auf weiterhin vorteilhafte Weise dem zapfenseitigen Ende des Dichtungsbalgs eine Spanneinrichtung zugeordnet. Besonders vorteilhaft handelt es sich dabei um einen in das Material des Dichtungsbalgs integrierten Spannring. Ein integrierter Spannring ermöglicht eine einfache Montage, da für die Spanneinrichtung kein zusätzlicher Handhabungsaufwand entsteht. Zudem bewirkt ein integrierter Spannring einen über die Lebensdauer der Gelenkanordnung weitestgehend gleichbleibenden Anpressdruck.

Wie bereits erwähnt, handelt es sich bei dem Fahrwerksbauteil, in welches der Zapfenteil des Kugelzapfens zumindest teilweise hineinragt, zweckmäßigerweise um einen Radträger eines Fahrwerks.

Zur Ermöglichung einer leicht herzustellenden und leicht wieder lösbaren Verbindung zwischen Fahrwerksbauteil und Zapfenteil weist das Fahrwerksbauteil der Gelenkanordnung vorteilhaft eine zumindest abschnittsweise etwa zylinderförmige Ausnehmung auf, die das Zapfenteil zumindest teilweise aufnimmt.

Eine Befestigung zwischen Fahrwerksbauteil und Zapfenteil des Kugelzapfens ist vorteilhaft herstellbar, wenn im Material des Fahrwerkbauteils ein sich parallel zur Axialrichtung des Kugelzapfens erstreckender Trennschlitz ausgebildet ist, der im eingeführten Zustand des Kugelzapfens eine Verspannung zwischen Zapfenteil und Fahrwerksbauteil ermöglicht. Durch die Verspannung wird in diesem Fall ein Kraftschluss zwischen den betroffenen Bauteilen erzielt.

Ganz allgemein und unabhängig von der zuvor beschriebenen Gestaltung sieht eine vorteilhafte Ausgestaltung vor, dass das Zapfenteil im Wesentlichen zylinderförmig ausgebildet ist und zur Befestigung gegenüber dem Fahrwerksbauteil mit diesem formschlüssig und/oder kraftschlüssig verbindbar ist.

Die Erfindung wird nachfolgend anhand eines in der Zeichnung dargestellten Ausführungsbeispiels näher erläutert. Daraus ergeben sich auch weitere Vorteile und Wirkungen der Erfindung. In der Zeichnung zeigt:
- Fig. 1: eine Gelenkanordnung gemäß einem Ausführungsbeispiel der Erfindung in schematischer Darstellung im Schnitt im ausgewinkelten Zustand,
- Fig. 2: einen Kugelzapfen eines in der Gelenkanordnung aus Figur 1 vorgesehenen Kugelgelenks,
- Fig. 3: einen Dichtungsbalg der in Figur 1 gezeigten Gelenkanordnung in Einzeldarstellung im Schnitt,
- Fig. 4: eine schematische teilweise Schnittdarstellung einer wie in Figur 1 gezeigten Gelenkanordnung im nicht ausgewinkelten Zustand und mit integriertem Spannring,
- Fig. 5: eine Gelenkanordnung in perspektivischer Gesamtdarstellung im Einbauzustand, nicht ausgewinkelt.

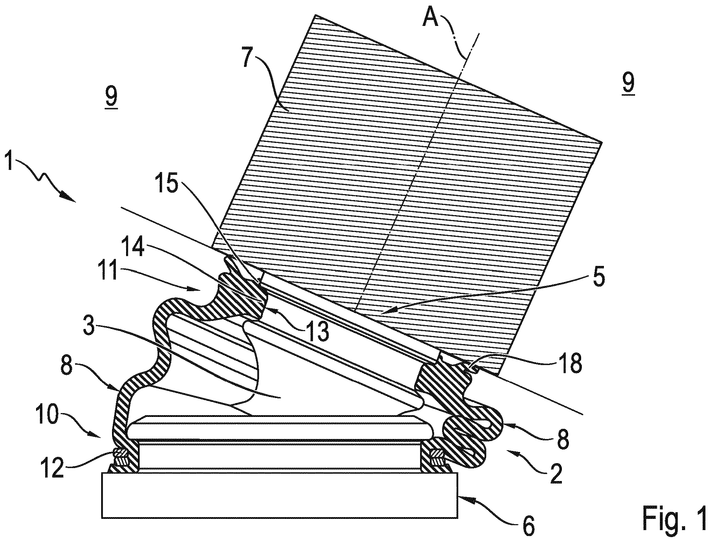

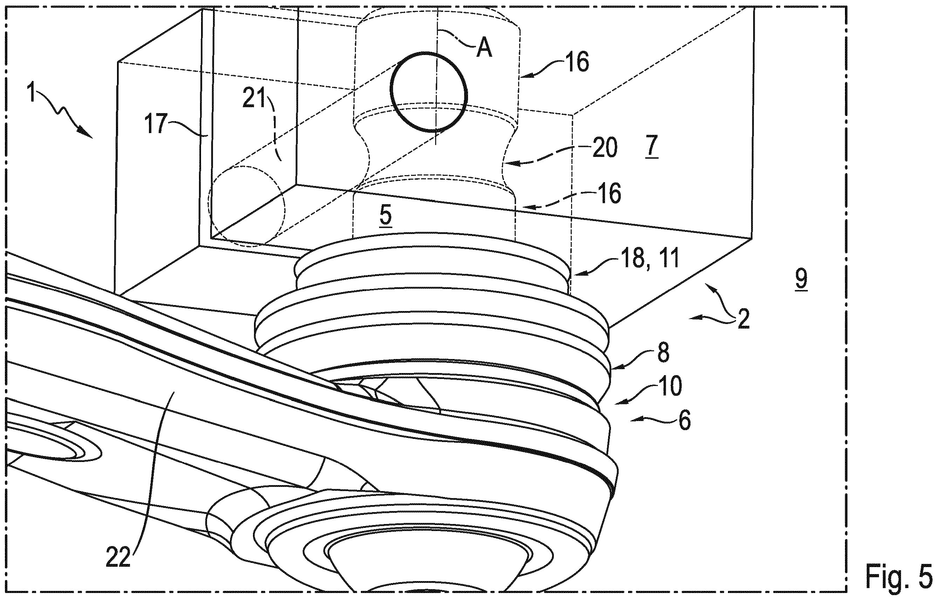

Figur 1 zeigt in Schnittdarstellung eine Gelenkanordnung 1 gemäß einem Ausführungsbeispiel der Erfindung. Es handelt sich um eine Gelenkanordnung 1 für ein Fahrwerk eines Kraftfahrzeugs. Als wesentliche Elemente weist die Gelenkanordnung 1 ein Kugelgelenk 2, das mit einem Fahrwerksbauteil 7, vorzugsweise einem Radträger, verbunden ist und einen Dichtungsbalg 8 auf. Auf für sich gesehen bekannte Weise besteht das Kugelgelenk 2 aus einem Kugelzapfen 3 und einem Gelenkgehäuse 6. Der Kugelzapfen 3 ist mit einem Kugelteil 4 vom Gelenkgehäuse 6 aufgenommen und diesem gegenüber um einen ― nicht gezeigten ― Mittelpunkt des Kugelteils dreh- und schwenkbeweglich gelagert. Ein Zapfenteil 5 des Kugelzapfens 3 ragt zumindest teilweise in das Fahrwerksbauteil 7 hinein und ist mit diesem auf noch näher zu erläuternde Weise (siehe Ausführungen zu Figur 5) verbunden.

Figur 2 zeigt in Einzeldarstellung den Kugelzapfen 3, der in der Gelenkanordnung 1 gemäß Figur 1 verbaut ist. Der Kugelzapfen 3 gliedert sich demnach in einen Kugelteil 4 mit im Wesentlichen sphärischer Außenfläche und einen davon in einer

Axialrichtung A abragenden Zapfenteil 5. Zwischen Kugelteil 4 und Zapfenteil 5 verjüngt sich der Kugelzapfen 3 in einem nicht näher bezeichneten Halsabschnitt, welcher eine möglichst große maximale Auswinkelung des Gelenkes (vergl. Figur 1) ermöglicht. Am Zapfenteil 5 ist eine umlaufende Nut 13 ausgebildet, die einen zylindrischen Nutgrund aufweist. Zum zapfenseitigen Ende des Zapfenteils 5 ist das Zapfenteil 5 im Wesentlichen zylinderförmig ausgebildet, wobei die Zylinderform einmal unterbrochen wird durch eine umlaufende Arretierungsnut 20, die einen konkaven Nutgrund aufweist. Es sei darauf hingewiesen, dass das Zapfenteil 5 - abweichend von der Darstellung gemäß Fig. 2 - alternativ auch kegelstumpfförmig (anstatt zylinderförmig) ausgebildet sein könnte.

Mit Bezug auf Figur 1 ist die Gelenkanordnung 1 hinsichtlich eines weiteren für die Erfindung wesentlichen Bauteils zu erläutern. Dabei handelt es sich um den Dichtungsbalg 8, der in der Darstellung der Figur 1 aufgrund der Auswinkelung des Kugelgelenks 2 in einem verformten Zustand dargestellt ist.

Figur 3 zeigt den Dichtungsbalg 8, der bei der Gelenkanordnung 1 aus Figur 1 verbaut ist, im unverformten Zustand in Einzeldarstellung. Es handelt sich demnach um ein schlauchartiges Element aus einem verformbaren Elastomermaterial, das im gezeigten Ausführungsbeispiel als sogenannter Doppelfaltenbalg (zweibäuchig) ausgeführt ist. Der Dichtungsbalg 8 erstreckt sich schlauchartig in Axialrichtung A von einem gehäuseseitigen Ende 10 zu einem zapfenseitigen Ende 11. Im Zusammenhang der vorliegenden Erfindung ist insbesondere das zapfenseitige Ende 11 des Dichtungsbalgs 8 von Interesse.

Am zapfenseitigen Ende 11 des Dichtungsbalgs 8 ist ein umlaufend nach innen ragender Abschnitt 14 ausgebildet. Wie in der Figur 3 zu erkennen, weist der Abschnitt 14 mehrere nach innen ragende Dichtlippen auf.

Weiterhin ist am zapfenseitigen Ende 11 des Dichtungsbalgs 8 angrenzend an den Abschnitt 14 ein umlaufender Vorsprung 15 ausgebildet, der in Axialrichtung A abragt.

Weiterhin ist am zapfenseitigen Ende 11 des Dichtungsbalgs 8 in einem radial weiter außen liegenden Bereich eine in Axialrichtung A abragende umlaufende Dichtlippe 18 ausgebildet.

Dem zapfenseitigen Ende 11 des Dichtungsbalgs 8 sind somit drei verschiedene Dichtelemente zugeordnet, der nach innen ragende umlaufende Abschnitt 14, der umlaufende Vorsprung 15 sowie die umlaufende Dichtlippe 18.

Figur 1, welche die Gelenkanordnung 1 in einem ausgewinkelten Betriebszustand zeigt, veranschaulicht die Wirkungsweise der erfindungsgemäßen Gelenkanordnung 1. Die am Zapfenteil 5 des Kugelzapfens 3 ausgebildete umlaufende Nut 13 nimmt den nach innen ragenden Abschnitt 14 des zapfenseitigen Endes des Dichtungsbalgs 8 zur Bildung eines Hauptabdichtbereichs auf. Der Abschnitt 14 füllt die Nut 13 dabei umfänglich aus und geht somit einen Formschluss ein. Zwischen Dichtungsbalg 8 und Zapfenteil 5 des Kugelzapfens 3 werden auf diese Weise mehrere Dichtflächen gebildet, von denen sich eine in Umfangsrichtung des Kugelzapfens 3 und von denen sich zwei in Radialrichtung bezogen auf den Kugelzapfen 3 erstrecken. Durch Eingriff des Abschnitts 14 in die umlaufende Nut 13 wird auf diese Weise ein Hauptabdichtbereich gebildet, wobei aufgrund des Formschlusses vorteilhaft gewährleistet ist, dass das zapfenseitige Ende 11 des Dichtungsbalgs 8 in einer axial definierten Position gehalten wird, welche insbesondere unabhängig vom Verschleißzustand übriger Dichtelemente des Dichtungsbalgs 8 ist.

Der umlaufende Vorsprung 15 liegt an einem schmalen Bereich einer Umfangsfläche des Zapfenteils 5 an und wirkt somit als eine radiale Vordichtung zwischen Kugelzapfen 3 und Dichtungsbalg 8. Der umlaufende Vorsprung 15 ist dabei hinsichtlich seiner axialen Erstreckung so bemessen, dass dieser das Fahrwerksbauteil 7 nicht berührt. Der bereits beschriebene Formschluss zwischen Abschnitt 14 und umlaufender Nut 13 gewährleistet dabei, dass der umlaufende Vorsprung 15 über die gesamte Betriebsdauer der Gelenkanordnung 1 sicher vom Fahrwerksbauteil 7 beabstandet ist. Diese Anordnung gewährleistet auf vorteilhafte Weise, dass zwischen dem durch den umlaufenden Vorsprung 15 gebildeten Vorabdichtbereich und dem Fahrwerksbauteil 7 trotz einer betriebsbedingten Verdrehung des Fahrwerksbauteils 7 und des damit verbundenen Kugelzapfens 3 um die Achse A gegenüber dem zapfenseitigen Ende 11 des Dichtungsbalgs 8 kein Verschleiß stattfindet. Der durch den umlaufenden Vorsprung 15 gebildete Vorabdichtbereich wird damit durch den Betrieb der Gelenkanordnung 1 nicht nachteilig beeinträchtigt.

Zusätzlich verhindert die Dichtlippe 18, die im Einbauzustand gemäß Figur 1 axial gegenüber dem Fahrwerksbauteil 7 abdichtet, ein Eindringen von Schmutz bzw. Staub und/oder Feuchtigkeit in den Dichtbereich.

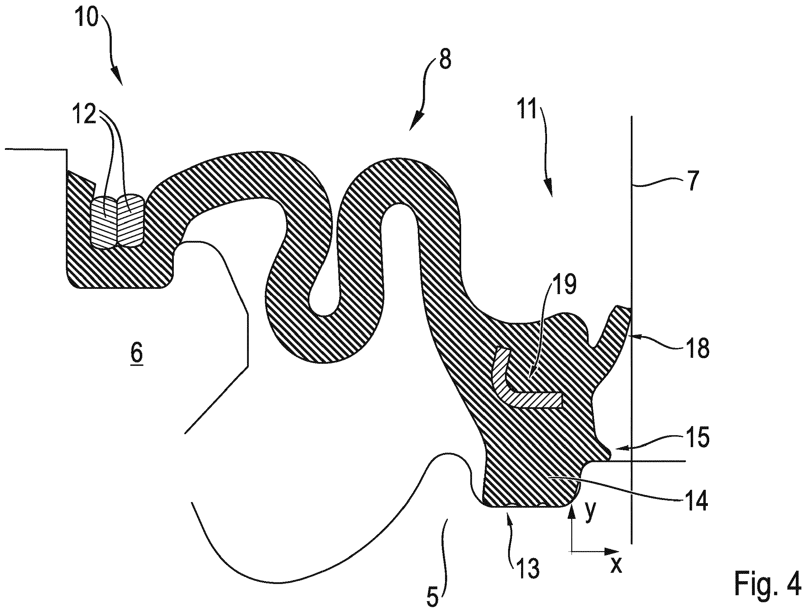

Figur 4 zeigt in vergrößerter Darstellung in schematischer Schnittansicht nochmals das bereits beschriebene Dichtsystem der in Figur 1 gezeigten Gelenkanordnung 1.

Gleiche Bezugszeichen beziehen sich dabei auf gleiche Bauteile, weshalb zur Vermeidung von Wiederholungen auf die vorigen Ausführungen verwiesen wird. Zusätzlich ist zu sehen, dass das gehäuseseitige Ende 10 des Dichtungsbalgs 8 am Gelenkgehäuse 6 mittels eines Flachdrahtspannrings 12 gesichert ist. Weiterhin ist zu sehen, dass das zapfenseitige Ende 11 des Dichtungsbalgs 8 eine Spanneinrichtung 19 in Form eines in das Material des Dichtungsbalgs 8 integrierten Spannrings aufweist. Der Spannring 19 sorgt vorteilhaft dafür, dass in dem durch den innen ragenden Abschnitt 14 und die umlaufende Nut 13 gebildeten Hauptabdichtbereich dauerhaft ausreichende Dichtkräfte aufgebracht werden. Die Integration des Spannrings 19 erleichtert dabei die Montage des Dichtungsbalgs 8, da kein zusätzliches Bauteil zu handhaben ist.

Figur 5 zeigt eine erfindungsgemäße Gelenkanordnung 1 in einem beispielhaften Einbauzustand in perspektivischer Darstellung. Da die Gelenkanordnung 1 im montierten Zustand als Teil eines Lenkers 22 gezeigt ist (das Gelenkgehäuse 6 ist Teil des Lenkers 22), und da der Dichtungsbalg 8 nicht transparent gezeichnet ist, sind einzelne Bereiche der Gelenkanordnung 1 verdeckt. Die Darstellung der Figur 5 eignet sich jedoch zur Erläuterung weiterer Aspekte der Erfindung. Bei dem vereinfacht dargestellten Fahrwerksbauteil 7 handelt es sich beispielsweise um einen Radträger eines Fahrwerks. Zur einfachen und sicheren Montage bzw. Demontage weist das Fahrwerksbauteil 7 eine zumindest abschnittsweise etwa zylinderförmige Ausnehmung 16 auf. In diese Ausnehmung 16 ist das Zapfenteil 5 teilweise eingeführt. Das Zapfenteil 5 ist insbesondere soweit in die Ausnehmung 16 eingeführt, dass die am Zapfenteil 5 ausgebildete umlaufende Arretierungsnut 20 (vergl. auch Figur 2) im Fahrwerksbauteil 7 über einen quer zur Axialrichtung A in das Fahrwerksbauteil 7 eingebrachten Befestigungsbolzen 21 darin gesichert ist.

An dem Fahrwerksbauteil 7 ist weiterhin ein Trennschlitz 17 ausgebildet, der sich parallel zur Axialrichtung A des Kugelzapfens 3 bzw. der Ausnehmung 16 erstreckt und unmittelbar an die Ausnehmung 16 angrenzt. Der Trennschlitz 17 ermöglicht im eingeführten Zustand des Kugelzapfens 3 in das Fahrwerksbauteil 7 eine Verspannung zwischen Zapfenteil 5 und Fahrwerksbauteil 7.

Aufgrund der Gestaltung des Dichtsystem der Gelenkanordnung 1, wie anhand der vorigen Figuren beschrieben, ist auf vorteilhafte Weise gewährleistet, dass die durch den Trennschlitz 17 am Fahrwerksbauteil 7 entstehenden scharfen Kanten zumindest nicht in Verschleißkontakt geraten können mit dem den Vorabdichtbereich bildenden umlaufenden Vorsprung 15. Die Zuverlässigkeit und Langlebigkeit der Gelenkanordnung 1 ist damit vorteilhaft gewährleistet.

### Bezugszeichen

- 1: Gelenkanordnung
- 2: Kugelgelenk
- 3: Kugelzapfen
- 4: Kugelteil
- 5: Zapfenteil
- 6: Gelenkgehäuse
- 7: Radträger
- 8: Dichtungsbalg
- 9: Umgebung
- 10: gehäuseseitiges Ende
- 11: zapfenseitiges Ende
- 12: Flachdrahtspannring
- 13: umlaufende Nut
- 14: nach innen ragender Abschnitt (Hauptabdichtbereich)
- 15: umlaufender Vorsprung (Vorabdichtbereich)
- 16: abschnittsweise zylinderförmige Ausnehmung
- 17: Trennschlitz
- 18: Staublippe
- 19: integrierter Spannring
- 20: umlaufende Arretierungsnut
- 21: Befestigungsbolzen
- 22: Lenker
- A: Axialrichtung

## Patentansprüche

1. Gelenkanordnung (1) für ein Fahrwerk, aufweisend ein Kugelgelenk (2) mit einem Kugelzapfen (3), der mit einem Kugelteil (4) dreh- und schwenkbeweglich gegenüber einem Gelenkgehäuse (6) gelagert ist und der mit einem Zapfenteil (5) zumindest teilweise in ein Fahrwerksbauteil (7) hineinragt, sowie einen Dichtungsbalg (8), der sich von einem gehäuseseitigen Ende (10) zu einem zapfenseitigen Ende (11) schlauchartig erstreckt, um das Kugelgelenk (2) gegenüber der äußeren Umgebung (9) abzudichten, wobei am Zapfenteil (5) des Kugelzapfens (3) eine umlaufende Nut (13) ausgebildet ist, die einen nach innen ragenden Abschnitt (14) des zapfenseitigen Endes (11) des Dichtungsbalgs (8) zur Bildung eines Hauptabdichtbereichs aufnimmt, **dadurch gekennzeichnet, dass** am zapfenseitigen Ende (11) des Dichtungsbalgs (8) ein umlaufender Vorsprung (15) zur Bildung eines Vorabdichtbereichs gegenüber dem Zapfenteil (5) ausgebildet ist, wobei die umlaufende Nut (13) axial derart am Zapfenteil (5) positioniert ist, dass der umlaufende Vorsprung (15) sicher, insbesondere kontaktfrei von dem Fahrwerksbauteil (7) beabstandet ist und der umlaufende Vorsprung (15) in Axialrichtung vom zapfenseitigen Ende (11) abragt.

2. Gelenkanordnung nach Anspruch 1, **dadurch gekennzeichnet, dass** der umlaufende Vorsprung (15) einen in radialer Richtung gegenüber dem Zapfenteil (5) wirkenden Vorabdichtbereich bildet.

3. Gelenkanordnung nach einem der vorigen Ansprüche, **dadurch gekennzeichnet, dass** am zapfenseitigen Ende (11) des Dichtungsbalgs (8) eine in Axialrichtung (A) wirkende, das Fahrwerksbauteil (7) berührende Dichtlippe (18) ausgebildet ist.

4. Gelenkanordnung nach einem der vorigen Ansprüche, **dadurch gekennzeichnet, dass** dem zapfenseitigen Ende (11) des Dichtungsbalgs (8) eine Spanneinrichtung (19) in Form eines in das Material des Dichtungsbalgs (8) integrierten Spannrings zugeordnet ist.

5. Gelenkanordnung nach einem der vorigen Ansprüche, **dadurch gekennzeichnet, dass** es sich bei dem Fahrwerksbauteil (7) um einen Radträger eines Fahrwerks handelt.

6. Gelenkanordnung nach einem der vorigen Ansprüche, **dadurch gekennzeichnet, dass** das Fahrwerksbauteil (7) eine zumindest abschnittsweise etwa zylinderförmige Ausnehmung (16) aufweist, die das Zapfenteil (5) zumindest teilweise aufnimmt.

7. Gelenkanordnung nach einem der vorigen Ansprüche, **dadurch gekennzeichnet, dass** im Material des Fahrwerksbauteils (7) ein sich parallel zur Axialrichtung (A) des Kugelzapfens (3) erstreckender Trennschlitz (17) ausgebildet ist, der im eingeführten Zustand des Kugelzapfens (3) eine Verspannung zwischen Zapfenteil (5) und Fahrwerksbauteil (7) ermöglicht.

8. Gelenkanordnung nach einem der vorigen Ansprüche, **dadurch gekennzeichnet, dass** das Zapfenteil (5) im Wesentlichen zylinderförmig ausgebildet ist und zur Befestigung gegenüber dem Fahrwerksbauteil (7) mit diesem formschlüssig und/oder kraftschlüssig verbindbar ist.

## Claims

1. Joint arrangement (1) for a chassis, having a ball joint (2) with a ball pivot (3) which is mounted by way of a ball part (4) such that it can be moved rotatably and pivotably with respect to a joint housing (6) and which protrudes with a pivot part (5) at least partially into a chassis component (7), and a sealing boot (8) which extends in a tubular manner from a housing-side end (10) to a pivot-side end (11), in order to seal the ball joint (2) with respect to the external environment (9), a circumferential groove (13) being configured on the pivot part (5) of the ball pivot (3), which circumferential groove (13) receives an inwardly protruding section (14) of the pivot-side end (11) of the sealing boot (8) in order to form a main sealing region, **characterized in that** a circumferential projection (15) is configured at the pivot-side end (11) of the sealing boot (8) in order to form a preliminary sealing region with respect to the pivot part (5), the circumferential groove (13) being positioned axially on the pivot part (5) in such a way that the circumferential projection (15) is spaced apart safely, in particular in a contact-free manner, from the chassis component (7), and the circumferential projection (15) protrudes in the axial direction from the pivot-side end (11).

2. Joint arrangement according to Claim 1, **characterized in that** the circumferential projection (15) forms a preliminary sealing region which acts in the radial direction with respect to the pivot part (5).

3. Joint arrangement according to either of the preceding claims, **characterized in that** a sealing lip (18) which acts in the axial direction (A) and makes contact with the chassis component (7) is configured at the pivot-side end (11) of the sealing boot (8).

4. Joint arrangement according to one of the preceding claims, **characterized in that** the pivot-side end (11) of the sealing boot (8) is assigned a clamping device (19) in the form of a clamping ring which is integrated into the material of the sealing boot (8).

5. Joint arrangement according to one of the preceding claims, **characterized in that** the chassis component (7) is a wheel support of a chassis.

6. Joint arrangement according to one of the preceding claims, **characterized in that** the chassis component (7) has a recess (16) which is approximately cylindrical at least in regions and receives the pivot part (5) at least partially.

7. Joint arrangement according to one of the preceding claims, **characterized in that** a separation slit (17) which extends parallel to the axial direction (A) of the ball pivot (3) is configured in the material of the chassis component (7), which separation slit (17), in the introduced state of the ball pivot (3), makes bracing between the pivot part (5) and the chassis component (7) possible.

8. Joint arrangement according to one of the preceding claims, **characterized in that** the pivot part (5) is of substantially cylindrical configuration, and can be connected in a positively locking and/or non-positive manner to the chassis component (7) for fastening with respect to the latter.

## Revendications

1. Système d'articulation (1) destiné à un mécanisme de roulement, ledit système comprenant une articulation à rotule (2) pourvue d'un pivot à rotule (3) qui est monté de manière à pouvoir tourner et pivoter par rapport à un boîtier d'articulation (6) avec une partie rotule (4) et qui fait saillie au moins partiellement dans un composant (7) du mécanisme de roulement avec une partie pivot (5), ainsi qu'un soufflet d'étanchéité (8) qui s'étend à la manière d'un tuyau d'une extrémité côté boîtier (10) à une extrémité côté pivot (11) afin d'étanchéifier l'articulation à rotule (2) par rapport à l'environnement extérieur (9), une rainure circonférentielle (13) étant ménagée au niveau de la partie pivot (5) du pivot à rotule (3), laquelle rainure reçoit une portion (14), faisant saillie vers l'intérieur, de l'extrémité côté pivot (11) du soufflet d'étanchéité (8), laquelle portion est destinée à former une zone d'étanchéité principale, **caractérisé en ce qu'**une saillie circonférentielle (15), destinée à former une zone de pré-étanchéité par rapport à la partie pivot (5), est formée à l'extrémité côté pivot (11) du soufflet d'étanchéité (8), la rainure circonférentielle (13) étant positionnée axialement sur la partie pivot (5) de telle sorte que la saillie circonférentielle (15) soit espacée de manière sûre, en particulier sans contact, du composant (7) du mécanisme de roulement et que la saillie circonférentielle (15) soit saillante axialement de l'extrémité côté pivot (11).

2. Système d'articulation selon la revendication 1, **caractérisé en ce que** la saillie circonférentielle (15) forme une zone de pré-étanchéité qui agit dans la direction radiale par rapport à la partie pivot (5).

3. Système d'articulation selon l'une des revendications précédentes, **caractérisé en ce qu'**une lèvre d'étanchéité (18) qui agit dans la direction axiale (A) et qui est en contact avec le composant (7) du mécanisme de roulement est formée à l'extrémité côté pivot (11) du soufflet d'étanchéité (8).

4. Système d'articulation selon l'une des revendications précédentes, **caractérisé en ce qu'**un dispositif de serrage (19) se présentant sous la forme d'une bague de serrage intégrée dans le matériau du soufflet d'étanchéité (8) est associé à l'extrémité côté pivot (11) du soufflet d'étanchéité (8).

5. Système d'articulation selon l'une des revendications précédentes, **caractérisé en ce que** le composant (7) du mécanisme de roulement est un support de roue d'un mécanisme de roulement.

6. Système d'articulation selon l'une des revendications précédentes, **caractérisé en ce que** le composant (7) du mécanisme de roulement comporte un évidement (16) au moins par portions à peu près cylindrique qui reçoit au moins partiellement la partie pivot (5).

7. Système d'articulation selon l'une des revendications précédentes, **caractérisé en ce qu'**une fente de séparation (17), qui s'étend parallèlement à la direction axiale (A) du pivot à rotule (3) et qui, lorsque le pivot à rotule (3) est inséré, permet une déformation entre la partie pivot (5) et le composant (7) du mécanisme de roulement, est ménagée dans le matériau du composant (7) du mécanisme de roulement.

8. Système d'articulation selon l'une des revendications précédentes, **caractérisé en ce que** la partie pivot (5) est sensiblement cylindrique et peut être reliée par complémentarité de formes et/ou en force à l'élément (7) du mécanisme de roulement afin d'être fixée par rapport à celui-ci.
